# EUROPEAN PATENT APPLICATION

(11) **EP 1 760 423 A1**
(43) Date of publication of application: **07.03.2007**
(21) Application number: 06018597.2
(22) Date of filing: 05.09.2006
(51) Int. Cl.: G01B 11/06

(54) **Method of inspecting optical recording medium**

(30) Priority: 06.09.2005 JP 2005258401; 14.07.2006 JP 2006194595
(71) Applicant: Ricoh Company, Ltd., Tokyo 143-8555 (JP)
(72) Inventor: Kibe, Takeshi Ricoh Company, Ltd., Tokyo 143-8555 (JP)
(74) Representative: Barz, Peter

(57) **Abstract**

A method of inspecting an optical recording medium including irradiating an optical recording medium including a substrate, a first dielectric layer, a recording layer, a second dielectric layer and a reflecting layer with an infrared light from a direction of the first dielectric layer to obtain the reflection intensity of the optical recording medium and comparing the reflection intensity with a criterion infrared light reflection intensity determined beforehand using another optical recording medium in which the recording layer has a target thickness. The first dielectric layer, the recording layer, the second dielectric layer and the reflecting layer are provided on the substrate in this order or vice versa.

## Description

### BACKGROUND OF THE INVENTION

### Field of the Invention

The present invention relates to a method of inspecting the thickness of a layer in an optical recording medium in the manufacturing process thereof.

Typical methods of measuring the thickness of a thin layer are, for example, a method of optically measuring the thickness of a thin layer of a sample in which the thin layer is provided on a substrate by an elipsometer or a spectrophotometer or a method of physically measuring the thickness of a thin layer with a stylus profilometer. These methods are effective to control the thickness of a thin layer when the sputtering conditions are changed or adjust the variance in the thickness due to the consumption of the sputtering materials over a long period of time.

However, in a continuous production of optical recording media, defective optical recordingmedia, which have an excessively thin layer, may be abruptly manufactured due to abnormal sputtering such as microarcing, delay in response of plasma to the trigger of starting sputtering and the variance in sputtering gas pressure. Such abnormal sputtering occurs especially when a recording layer is formed. To exclude such abnormal media from properly produced media, an inline 100 % inspection system is preferred to the random inspection system mentioned above.

It is thus desired that, after forming multiple layers of a first dielectric layer, a recording layer, a second dielectric layer, a reflecting layer, etc. on a substrate by sputtering, the thickness of a layer is measured in a short time (i.e., within several seconds) not to affect the production time thereof.

The layer thickness in a layered structure can be optically measured by a spectroscopic elipsometer. This involves with drawbacks in that the measuring time is long and has an adverse impact on the production time, and the measuring device is extremely expensive.

Japanese patent No. 2973803 describes a method of controlling the thickness of a first dielectric layer on a substrate by measuring color system chromaticity with a colorimeter. The structure is simple and it is easy to use the method as an inline inspection. However, the thickness can be measured only for a first dielectric layer. In addition, considering the price of a colorimeter which can perform automatic measuring, it will be a heavy economic burden on a factory having a great number of lines when such a colorimeter is installed at each line.

Unexamined published Japanese patent application No. (hereinafter referred to as JOP) H09-073667 describes a method of controlling the thickness of a first dielectric layer and a recording layer based on spectroscopic reflectivity or tri-stimulus values composed of hue, saturation and luminosity. JOPs H10-009829 and 2000-249520 describe methods of measuring spectroscopic reflectivity of the thickness of a layered structure and calculating the thickness of each layer based on the reflectivity and wavelength at their minimum points and maximum points. These methods have complicated common processes of calculating the thickness of each layer using values (maximums, minimums and their wavelengths) obtained from the spectroscopic reflective spectrum based on the spectroscopic reflectivity measured beforehand for each layer. Therefore, a device to deal with such a complicated calculation process is used accordingly. Consequently, these methods have the same drawback, i.e., a heavy economic burden, as in the case of Japanese patent No. 2973803.

Further, DVD+RWs and DVD-RWs, which have come to be the main stream of the optical recording media in recent years, rarely have a first dielectric layer having a thickness not greater than 80 nm. This involves a problem for these methods in that it is difficult to find an apparent local maximum point with regard to reflectivity in a range of from 380 nm to 800 nm of wavelength.

### SUMMARY OF THE INVENTION

Because of these reasons, the present inventor recognizes that a need exists for a method of measuring the thickness of a layer in an optical recording medium for inspection in a simple and inexpensive manner.

Accordingly, an object of the present invention is to provide a method of measuring the thickness of a layer in an optical recording medium for inspection in a simple and inexpensive manner.

Briefly, this object and other objects of the present invention as hereinafter described will become more readily apparent and can be attained, either individually or in combination thereof, by a method of inspecting an optical recording medium including irradiating an optical recording medium comprising a substrate, a first dielectric layer, a recording layer, a second dielectric layer and a reflecting layer with an infrared light from a direction of the first dielectric layer to obtain a reflection intensity of the optical recording medium, and comparing the reflection intensity with a criterion infrared light reflection intensity determined beforehand using another optical recording medium in which the recording layer has a target thickness. The first dielectric layer, the recording layer, the second dielectric layer and the reflecting layer are provided on the substrate in this order or vice versa.

It is preferred that, in the method of inspecting an optical recording medium mentioned above, the wavelength of the infrared light is from 900 to 1,100 nm.

It is still further preferred that, in the method of inspecting an optical recording medium mentioned above, the light source of the infrared light is a semiconductor laser and the luminescence peak wavelength thereof is from 935 to 955 nm.

It is still further preferred that, in the method of inspecting an optical recording medium mentioned above, an optical fiber sensor is used to measure the infrared light reflection intensity.

It is still further preferred that, in the method of inspecting an optical recording medium mentioned above, the thickness of the first dielectric layer is not greater than 100 nm.

These and other objects, features and advantages of the present invention will become apparent upon consideration of the following description of the preferred embodiments of the present invention taken in conjunction with the accompanying drawings.

### BRIEF DESCRIPTION OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
Fig. 1 is a schematic diagram illustrating a layer thickness measuring device for measuring the recording layer of a DVD+RW in the manufacturing process thereof;
Fig. 2 is a diagram illustrating the relationship between the rate of change of the first dielectric layer, the phase change recording layer and the second dielectric layer relative to the standard (criterion) layer thickness thereof and their infrared light reflection intensity;
Fig. 3 is a diagram illustrating the relationships of each sample described later between the amount of change of the layer thickness of the first dielectric layer and the spectroscopic reflectivity while changing the measuring wavelength;
Fig. 4 is a diagram illustrating the relationships of each sample described later between the amount of change of the layer thickness of the phase change recording layer and the spectroscopic reflectivity while changing the measuring wavelength;
Fig. 5 is a diagram illustrating the relationships of each sample described later between the amount of change of the layer thickness of the second dielectric layer and the spectroscopic reflectivity while changing the measuring wavelength;
Fig. 6 is a diagram illustrating the change illustrated in Fig. 4 by the correlation function;
Fig. 7 is a diagram illustrating the relationships of each sample described later between the amount of change of the layer thickness of the phase change recording layer and the spectroscopic reflectivity while changing the measuring wavelength in which SbSn based phase change recording materials are used; and
Fig. 8 is a diagram illustrating the change illustrated in Fig. 7 by the correlation function.

### DETAILED DESCRIPTION OF THE INVENTION

The present invention will be described below in detail with reference to several embodiments and accompanying drawings.

The present invention targets optical recording media in which at least a first dielectric layer, a recording layer, a second dielectric layer and a reflecting layer are provided on a substrate in this order or vice versa.

Materials for use in the recording layer are, for example, SbTe or SbSn based phase change recording materials but not specifically limited thereto.

There are no specific limits to the materials for use in the substrate, the first dielectric layer, the second dielectric layer and the reflective layer. Any known materials can be suitably used. In addition, the optical recording media can have an interface layer, an intermediate layer, a cover layer, etc.

Next is the inspection procedure in the present invention:
(1) Irradiate an optical recording medium in which each layer is formed with an infrared light from the direction of the first dielectric layer;
(2) Measure the reflection intensity of the infrared light of the optical recording medium;
(3) Compare the measured reflection intensity with the criterion infrared light reflection intensity determined based on the infrared light reflection intensity measured beforehand for an optical recording medium in which the recording layer has a thickness in a target range; and
(4) When the result of the comparison is that the measured reflection intensity is out of the criterion range, the optical recording medium is determined as "defective with regard to the layer thickness of the recording layer".

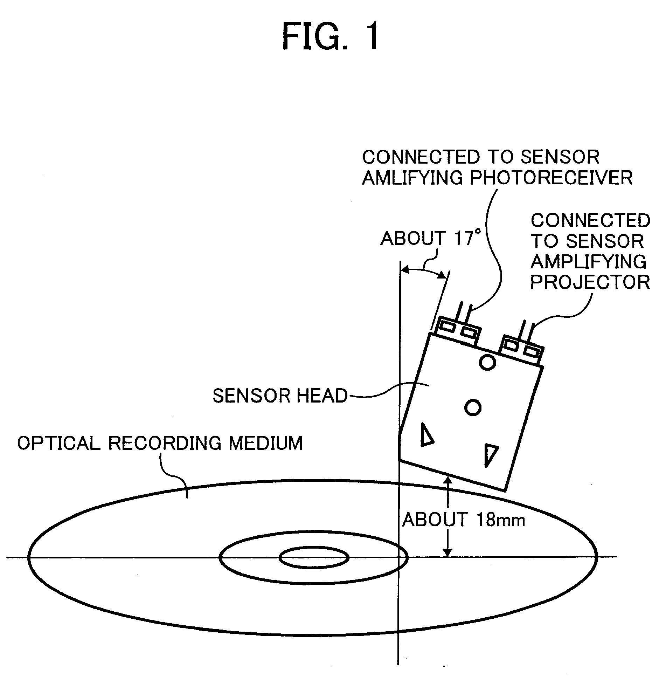

Fig. 1 is a schematic diagram illustrating a sensor head of a layer thickness measuring device for a recording layer in the manufacturing process of DVD+RWs. As illustrated in Fig. 1, the sensor head is connected to a sensor amplifying projector and a sensor amplifying photoreceiver. The sensor head is set to tilt at about 17 ° relative to the vertical axis of an optical recording medium with a distance of about 18 mm therebetween. When a small-sized optical fiber sensor including a sensor amplifier FS-V21X and a sensor head CZ-41 (both manufactured by Keyence Corporation) is used as the optical system for measuring the infrared light reflection intensity, the irradiation light used for inspection is an infrared laser beam having a luminescence peak wavelength of about 950 nm. The sensor head CZ-41 of a small spot type is preferably used and adjusted to have a distance and an angle to maximize the amount of light received. The amount of light received is displayed on the digital display provided to the main body of the sensor amplifier.

The layer thickness measuring device is not limited to those mentioned above. Any device can be used as long as the infrared light reflection intensity is measured thereby.

A preferred embodiment of the present invention is described below.

DVD+RW discs to be measured for layer thickness are manufactured as follows.

On a polycarbonate substrate for DVD+Rs having a thickness of 0.6 mm, which is manufactured by ejection molding using a stamper having a guide groove for tracking, a first dielectric layer, an interface layer, a phase change recording layer, a second dielectric layer, an intermediate layer and a reflective layer are formed in this order by using magnetron sputtering device (Big Sprinter, manufactured by OC Oerlikon Holdings AG) for forming multiple layers having a great number of chambers or targets for forming layers.

ZnS-SiO₂ (80:20 inmolar ratio) is used for the first dielectric layer and the thickness thereof is about 55 nm. ZrO₂ (Y₂O₃ in an amount of 3 mol %) - TiO₂ (80:20 in molar ratio) is used and the thickness thereof is about 3 nm. AgGeInSbTe (1:3:3:72:21 in atomic %) is used to form the phase change recording layer and the thickness thereof is about 12.5 nm. ZnS-SiO₂ (80: 20 in molar ratio) is used for the second dielectric layer and the thickness thereof is about 12 nm. SiC is used for the intermediate layer and the thickness thereof is about 4 nm. Ag is used for the reflective layer and the thickness thereof is about 140 nm.

The target layer thickness by design is as mentioned above.

Assuming that the thickness of each layer of an optical recording medium changes, samples are made in which the thickness is intentionally changed with regard to the first dielectric layer, the phase change recording layer, and the second dielectric layer. The infrared light reflection intensity of the samples is measured and the measuring results are shown in Table 1. A small-sized optical fiber sensor including a sensor amplifier FS-V21X and a sensor head CZ-41 (both manufactured by Keyence Corporation) is used for the measuring. The irradiation light used for inspection is an infrared laser beamhaving a luminescence peak wavelength of about 950 nm. P in the infrared light reflection intensity column in Table 1 represents Point.

**Table 1**

| Sample No. | First dielectric layer | | Phase change recording layer | | Second dielectric layer | | Infrared light reflection intensity |
|---|---|---|---|---|---|---|---|
| | Thickness (nm) | Rate of change (%) | Thickness (nm) | Rate of change (%) | Thickness (nm) | Rate of change (%) | Measuring Results (P) |
| A-1 | 35.0 | -36 | 12.5 | 0 | 12.0 | 0 | 129 |
| A-2 | 45.0 | -18 | 12.5 | 0 | 12.0 | 0 | 122 |
| A-3 | 55.0 | 0 | 12.5 | 0 | 12.0 | 0 | 121 |
| A-4 | 65.0 | 18 | 12.5 | 0 | 12.0 | 0 | 138 |
| A-5 | 75.0 | 36 | 12.5 | 0 | 12.0 | 0 | 164 |
| A-6 | 85.0 | 55 | 12.5 | 0 | 12.0 | 0 | 186 |
| B-1 | 55.0 | 0 | 6.5 | -48 | 12.0 | 0 | 495 |
| B-2 | 55.0 | 0 | 8.5 | -32 | 12.0 | 0 | 343 |
| B-3 | 55.0 | 0 | 10.2 | -16 | 12.0 | 0 | 211 |
| B-4 | 55.0 | 0 | 12.5 | 0 | 12.0 | 0 | 121 |
| B-5 | 55.0 | 0 | 14.5 | 16 | 12.0 | 0 | 83 |
| B-6 | 55.0 | 0 | 16.5 | 32 | 12.0 | 0 | 62 |
| B-7 | 55.0 | 0 | 18.5 | 48 | 12.0 | 0 | 65 |
| C-1 | 55.0 | 0 | 12.5 | 0 | 6.0 | -50 | 206 |
| C-2 | 55.0 | 0 | 12.5 | 0 | 8.0 | -33 | 180 |
| C-3 | 55.0 | 0 | 12.5 | 0 | 10.0 | -17 | 144 |
| C-4 | 55.0 | 0 | 12.5 | 0 | 12.0 | 0 | 121 |
| C-5 | 55.0 | 0 | 12.5 | 0 | 14.0 | 17 | 111 |
| C-6 | 55.0 | 0 | 12.5 | 0 | 16.0 | 33 | 101 |
| C-7 | 55.0 | 0 | 12.5 | 0 | 18.0 | 50 | 93 |

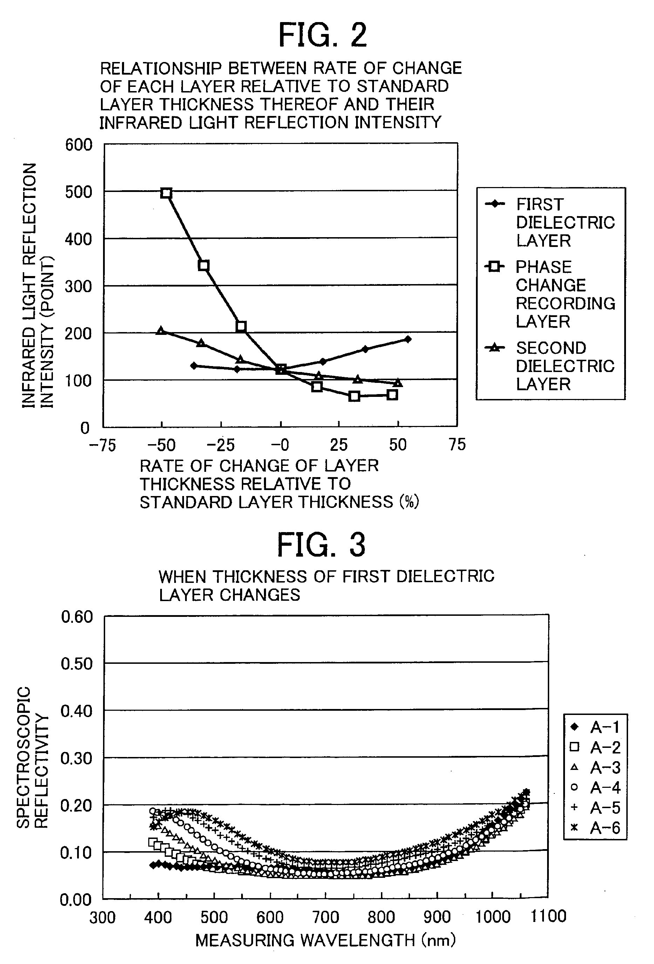

With regard to the results shown in Table 1, to compare the relationship between the rate of change and the infrared light reflection intensity for each layer, the rate of change (%) of the layer thickness and the infrared light reflection intensity (Point) for the first dielectric layer, the phase change recording layer and the second dielectric layer having a standard layer thickness are shown in Fig. 2. As seen in Fig. 2, the infrared light reflection intensity varies most against the change in the layer thickness of the phase change recording layer (especially when the layer thickness decreases). When the limit of the infrared light intensity is set to be 180 points with regard to a phase change recording layer, it is easily possible to detect a phase change recording layer having a thickness lower than by about 10 % relative to the standard thickness.

In addition, since the time to be taken for the measuring is less than 1 second, an inline 100 % inspection system can be introduced without affecting the production time of optical recording media. Further, the small-sized optical fiber sensor mentioned above can be structured from extremely inexpensive parts and used and installed in a small space. Furthermore, it is possible to perform inspection, for example, at multiple places in a production line while changing the inspection criteria to prevent detection errors.

Next, the spectroscopic reflectivity of each sample shown in Table 1 is measured while changing the measuring wavelength and the relationship between the amount of the change in the layer thickness and the spectroscopic reflectivity is compared. The results are shown in Figs. 3 to 5. For comparison, the range along the vertical axis is common in Figs. 3 to 5.

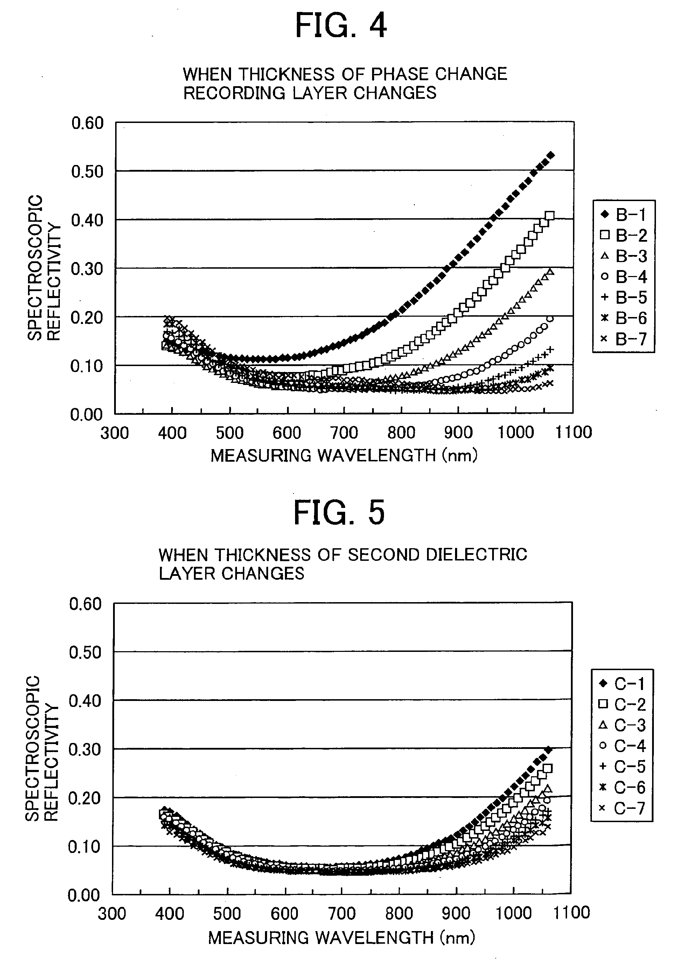

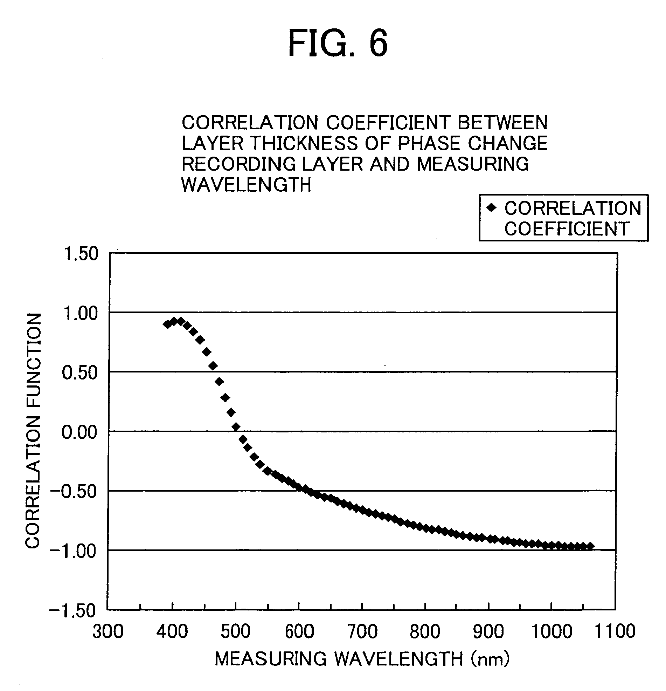

Among the changes of the reflection in the infrared light wavelength area shown in Figs. 3 to 5, the change shown in Fig. 4, in which the thickness of the phase change recording layer is changed, is distinguished when the rate of change for each layer relative to its standard layer thickness is about the same. That is, it is found that the change in the recording layer can be detected by checking the reflectivity to the infrared light wavelength area. Further, when the change shown in Fig. 4 is represented by correlation function, the graph shown in Fig. 6 is obtained. It is found in Fig. 6 that, in the wavelength range (not higher than 1,064 nm) set this time, the absolute value of the correlation function is asymptotically close to 1 as the measuring wavelength increases. Although the data for a wavelength of 1,100 nm is not shown, it is easily deducible that when the graph is extrapolated, the absolute value of the correlation function is asymptotically close further to 1 as the wavelength approaches to 1, 100 nm. That is, it is possible to perform an accurate inspection by setting the measuring wavelength of the infrared light reflection intensity between 900 to 1,100 nm.

In addition, when the thickness of the first dielectric layer of an optical recording medium is measured, the thickness is preferably not higher than 100 nm. In general, there are few phase change optical recording media having the first dielectric layer with a thickness higher than 100 nm, meaning that the thickness of the first dielectric layer for CD-RWs and DVD+RWs are not higher than 90 nm, and not higher than 70 nm, respectively, and the thickness for discs in the next generation (i.e., blue ray discs) is expected to be thinner than those. When the thickness of a first dielectric layer increases, the maximum point appears on the short wavelength side of the spectrum of the spectroscopic reflectivity. As seen in the graph for the sample A-6 (thickness of the first dielectric layer: 85 nm) in Fig. 3, the maximum point appears around 450 nm, which is the sign of the description mentioned above. When the thickness of the first dielectric layer increases to a value higher than 100 nm, the maximum point appears in the infrared light wavelength area for use in the measuring of the thickness of the recording layer in the present invention, which may affect the measuring accuracy of the layer thickness.

Next, another embodiment is described.

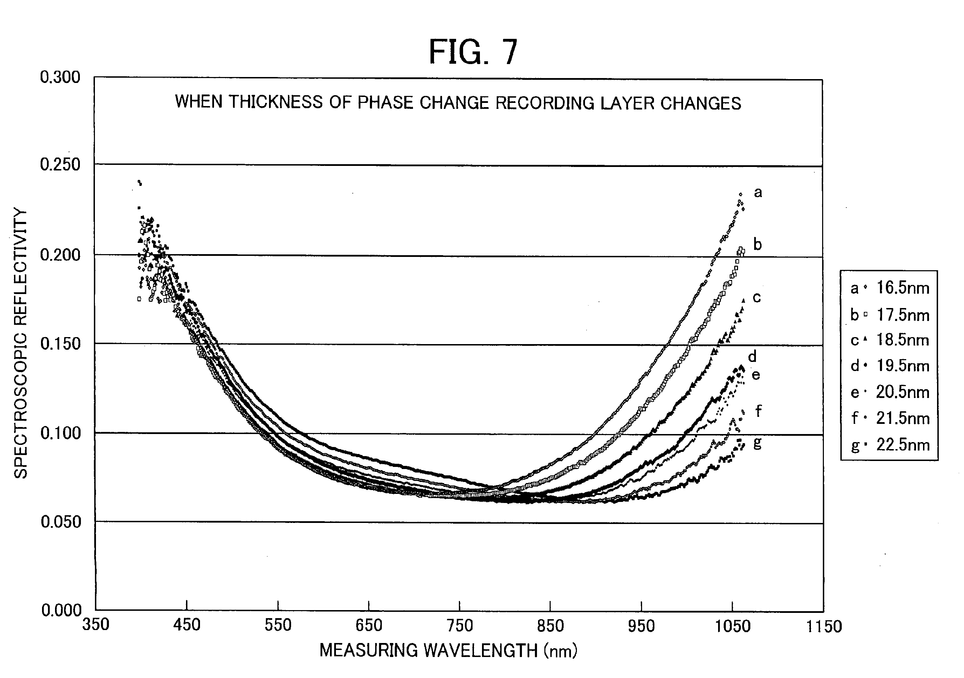

A DVD+RW disc sample is manufactured in the same manner as in the embodiment mentioned above except that the material of the phase change recording layer is changed to SbSn based phase change recording material. The relationship between the amount of change (16.5 to 22.5 nm) of the thickness of the phase change recording layer and the spectroscopic reflectivity is checked. The results are shown in Fig. 7.

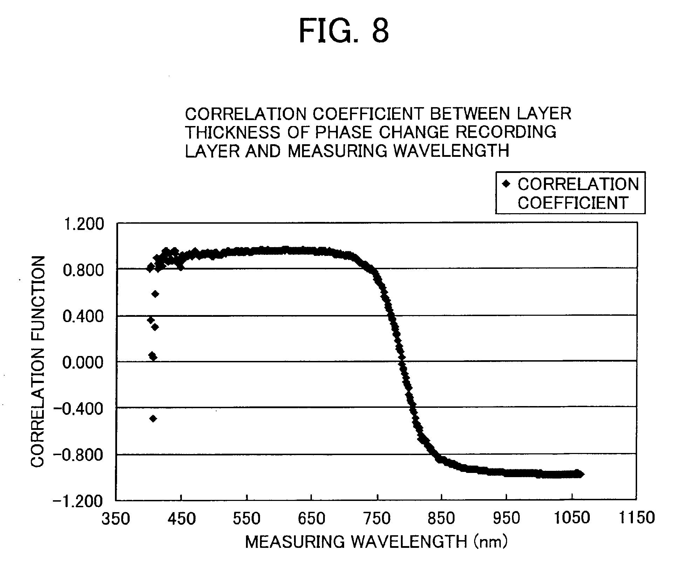

Further, Fig. 8 is a graph of the correlation function representing the change shown in Fig. 7. As in Fig. 6, it is found that the absolute value of the correlation function is asymptotically close to 1 in the measuring wavelength range (not higher than 1,064 nm) as the wavelength increases.

As described above, in the manufacturing process of optical recording media in which at least a first dielectric layer, a recording layer, a second dielectric layer and a reflective layer are provided on a substrate in this order, it is easily detect the change in the thickness of the phase change recording layer by measuring the infrared light reflection intensity.

In addition, the same effect can be obtained even when measuring the infrared light reflection intensity of a second layer information substrate (L1 substrate) of a double layered recording medium including L0 substrate and the L1 substrate. On the L1 substrate, at least a reflective layer, a second dielectric layer, a recording layer and a first dielectric layer are provided in this order.

When a semiconductor laser having a luminescence peak wavelength of from 935 to 955 nm is selected as the light source for use in measuring the infrared light reflection intensity, such a semiconductor is easily available in the market since the luminescence peak wavelength is most common among marketed infrared lasers.

In addition, when a typical optical fiber sensor is selected as the device for measuring infrared reflection intensity, a marketed infrared light sensor is usable. That is, the detector can be installed in an extremely inexpensive manner. Further, such a detector is of a small size and space-saving, meaning that the detector can be installed in a small space in a production line.

This document claims priority and contains subject matter related to Japanese Patent Applications Nos. 2005-258401 and 2006-194595, filedon 06 September 2005, and 14 July 2006, respectively.

## Claims

1. A method of inspecting an optical recording medium, comprising:
irradiating an optical recording medium comprising a substrate, a first dielectric layer, a recording layer, a second dielectric layer and a reflecting layer with an infrared light from the direction of the first dielectric layer to obtain a reflection intensity of the optical recording medium; and
comparing the reflection intensity with a criterion infrared light reflection intensity determined beforehand using the optical recording medium in which the recording layer has a target thickness,
wherein the first dielectric layer, the recording layer, the second dielectric layer and the reflecting layer are provided on the substrate in this order or vice versa.

2. The method of inspecting an optical recording medium according to Claim 1, wherein the wavelength of the infrared light is from 900 to 1,100 nm.

3. The method of inspecting an optical recording medium according to Claim 1 or 2, wherein the light source of the infrared light is a semiconductor laser and the luminescence peak wavelength thereof is from 935 to 955 nm.

4. The method of inspecting an optical recording medium according to any one of Claims 1 to 3, wherein an optical fiber sensor is used to measure the infrared light reflection intensity.

5. The method of inspecting anoptical recording medium according to any one of Claims 1 to 4, wherein the thickness of the first dielectric layer is not greater than 100 nm.
